# EUROPEAN PATENT SPECIFICATION

(11) **EP 3 484 267 B1**
(45) Date of publication and mention of the grant of the patent: **09.06.2021**
(21) Application number: 17745525.0
(22) Date of filing: 12.07.2017
(51) Int. Cl.: A01D 45/00, A01D 91/02

(54) **METHOD AND A SYSTEM FOR DETECTING ASPARAGUS IN GROUND**
VERFAHREN UND SYSTEM ZUR ERKENNUNG VON SPARGEL IM BODEN
PROCÉDÉ ET SYSTÈME DE DÉTECTION D'ASPERGES DANS LE SOL

(30) Priority: 13.07.2016 NL 2017160
(43) Date of publication of application: 22.05.2019
(73) Proprietor: Cerescon Holding B.V., 5666 BW Geldrop (NL)
(72) Inventor: VERMEER, Adrianus Johannes Petrus Maria, 5666 BW Geldrop (NL)
(74) Representative: V.O.
(86) International application number: PCT/NL2017/050466
(87) International publication number: WO 2018/012971

(56) References cited:
- EP-A1- 0 770 321
- EP-A1- 2 668 837
- DE-A1-102010 001 300
- US-A1- 2005 016 152

## Description

### FIELD OF THE INVENTION

The invention relates to a method and system for harvesting of asparagus.

### BACKGROUND TO THE INVENTION

Asparagus harvesting may be challenging and labor intensive. During the growing season sprouts can advance upwardly through the soil to finally appear as tips penetrating through the ground surface, wherein conventionally based on the location of the detected tips, the sprout can be cut off by a knife thrust into the bed after which the cut sprout is lifted from the bed. Generally, a harvest season extends over a period of several weeks, during which time the plant bed must be harvested repeatedly to remove the sprouts as they appear.

White asparagus grow undergrounds, typically in well prepared earth dams. The asparagus plants may remain productive for circa 10 years. Plant seedlings are typically placed in a sandy enclosure in the earth dam. The size of the crowns, i.e. underground bodies of the asparagus plants, can increase as the asparagus ages, so the bed will eventually become completely filled with roots and the width of the sprout position distribution will widen.

It is well known that white asparagus may be a result from the process of deprivation of light. The asparagus spears in the soil are not exposed to light and cannot produce chlorophyll, maintaining its color. The asparagus spears are quite sensitive to light and may change color if exposed to (day)light. Typically, this process already starts as the spears reach the upper few centimeters under the soil surface. The coloring of asparagus can be considered as a quality deterioration and therefore may reduce the commercial value of the asparagus harvest. In the prior art, this effect is counteracted by the use of foil to exclude light. Furthermore, the head can slightly open (as a flower) as soon as the counter pressure of the sand reduces in the top area of the sand bed. This may also result in a value reduction. For these reasons, it would be very attractive if it were possible to already harvest the asparagus while the spear heads were still at a sufficient depth below the surface. Therefore, an accurate subsurface detection method is required which cannot be provided by classical solutions.

Furthermore, asparagus spears tend to mature rather randomly and not in a controlled cycle. The spears typically do not grow in straight rows, but are spread out in a widely scattered pattern. Moreover, the height of the spears or the distance to the soil surface is subject to wide variation. Also, the thickness or diameter of the spears is not constant. The immature spears are sensitive and can be relatively easily become damaged and broken by contact and/or rough handling during harvesting of mature spears. It would therefore be beneficial if it were possible to subsurface harvest the asparagus leaving immature spears undamaged. This would significantly increase the efficiency and the quality of the harvesting. This is particularly challenging since the spears may grow relatively close to one another in no particular pattern

The documents EP 0 770 321 A1 and DE 10 2010 001 300 A1 disclose devices to detect the position of asparagus below the ground surface.

### SUMMARY OF THE INVENTION

The method according to the current invention can be employed for detecting asparagus in ground for asparagus harvest. The method comprises: inserting at least one proximity sensor below a ground surface at a scanning depth, wherein the at least one proximity sensor is arranged for detecting asparagus in proximity of the proximity sensor; moving, at the scanning depth below the ground surface, the at least one proximity sensor through the ground for defining a scanning movement path of the sensor below the ground surface; and adjusting said movement path of the proximity sensor upon local proximity detection of an asparagus by the at least one proximity sensor.

The proximity sensor can be arranged for detecting an asparagus located entirely under a ground surface surrounded by soil. By moving the proximity sensor through the ground below the ground surface, the proximity sensor may encounter an asparagus and detect the asparagus being located close to the sensor. In this way, it can be possible to accurately determine a position and/or orientation of the asparagus below the ground surface. Using subsurface proximity sensing, the detection and localization of asparagus may be performed more accurately.

The proximity sensor can be moved to a scanning depth below the ground surface, allowing to select depths or depth regions in which the scanning action by movement of the proximity sensor in the ground can be carried out. The scanning depth can be adjustable so as to be able to detect asparagus at a certain depth (or plurality of depths). For this purpose the method may employ an absolute depth with respect to a ground surface or a relative depth with respect to a reference value, for example with respect to a structure of the detection and/or harvesting system employing the method. By selection of the scanning depth it may be possible to control the detection rates and therefore the harvesting quantities. For example, it is possible to first select a scanning depth of 3 cm with respect to the ground surface, followed (for example on another day) by a scanning depth of 8 cm with respect to the ground surface, in which more asparagus can be detected and thus the harvesting quantities can be higher. Controlling the scanning depth can therefore be used to meet a certain commercial or economic demand for harvesting quantities. In an embodiment, it is possible to harvest at specific depth regions simultaneously by employing a plurality of proximity sensors displaced with respect to each other.

Furthermore, data registered by the proximity sensor may be used to derive properties of the asparagus, for example physical, chemical or geometrical properties. Other properties are also possible. For example, data from the proximity sensor may allow estimation of the thickness of an asparagus. This may be a measure for the maturity of the asparagus and therefore allow for determination and/or selection of asparagus with sufficient thickness for being harvested.

Advantageously, the method can be employed for detection of asparagus followed by a localized harvesting of detected asparagus located below a ground surface.

In an embodiment, the method can be employed to select spears of mature size and leave younger or immature spears for subsequent harvesting based on data from the proximity detection. The local proximity detection is thereby preferably performed virtually contactless with respect to the detected asparagus.

To that end, a proximity sensor may be arranged to already detect the presence of the asparagus in vicinity to the sensor without the need of actual contact with the asparagus. In this way, collision between the sensor and asparagus is evaded and a certain distance with respect to subsurface asparagus may be maintained. This also reduces the risk to damage immature asparagus by contact, with other words reduce the risk to contact and potentially damage asparagus having a too small length. In an exemplary embodiment, the proximity sensors can have a certain proximity detection range for detecting asparagus below a ground surface, i.e. with soil between the proximity sensor and the asparagus. The proximity detection range may e.g. depend on the soil properties or asparagus properties. In an embodiment the proximity range can be adjustable by controlling sensor input parameters.

Optionally, the movement path of the proximity sensor is adjusted so as to evade collision with the asparagus detected by the proximity sensor, while registering a location of the proximity sensor where the asparagus is detected.

The location of the proximity sensor where the asparagus is detected can be an indication of the location of an asparagus. In an embodiment, the distance of the proximity sensor with respect to the detected asparagus can be taken into account so as to obtain a better estimation of the location of the asparagus below the surface of the ground. The location of the proximity sensor where the asparagus is detected can be used for localized harvesting of the asparagus. During such localized harvesting, based on an (approximate) location of the asparagus detected by the proximity sensor, a cutter can be moved to a cutting depth for cutting the asparagus. Further, a grabber can be employed for pulling the cut asparagus out of the ground for harvesting.

Optionally, at least one proximity sensor is arranged to follow a detected outer surface of the detected asparagus from a scanning depth to a cutting depth.

Once the asparagus is detected, the scanning path of the proximity sensor can be adjusted. In an embodiment, the scanning depth may be increased, wherein a further direction of the proximity sensor is controlled so as to follow the detected asparagus based on the detected signal. In this way, the proximity sensor can be guided along a contour of the asparagus from a scanning depth to a cutting depth in which the asparagus needs to be cut for extraction during harvest, e.g. a position adjacent a base of the detected asparagus spear. In an exemplary embodiment, it is first determined based on the measured data obtained by the proximity sensor whether the asparagus is sufficiently thick (maturity) for being eligible for harvest. In this way, it can be possible to follow the contour of mature asparagus spears only.

In the process of following a contour of an asparagus from a scanning depth to a cutting depth, with the cutting depth being larger than the scanning depth, a line or curve in three-dimensional space may be tracked between the two points. The line depends on the contour and shape of the asparagus. From the orientation of the line in three-dimensional space below the ground surface, a volume such as a cylinder or cuboid can be determined which substantially encloses the detected asparagus in the ground. Advantageously, a localized harvesting of the detected asparagus may be performed substantially targeting said volume, so as to minimize the disturbance to the surroundings of the asparagus, therefore reducing the risk of contacting or damaging immature asparagus in the vicinity of the asparagus being harvested.

Instead of a cutting depth, also other depths can be employed (larger or smaller). In this case the cutting depth does not correspond to an actual cutting depth at which the asparagus is cut by a cutting action.

Optionally, the at least one proximity sensor is arranged on a cutting tool, wherein the cutting tool is moved relative to the asparagus for performing localized harvesting of the asparagus detected by the at least one proximity sensor. During localized harvesting, based on the location of the asparagus detected by the proximity sensor, the cutting tool can be moved to a cutting depth for cutting the asparagus.

This allows more efficient harvesting, since a proximity detection by the proximity sensor can be directly used for selectively harvesting the detected asparagus. In an exemplary embodiment, also a grabber is utilized for pulling the cut asparagus out of the ground for harvest. In an embodiment, a cutting tool, one or more proximity sensors, and a grabber are arranged on a harvester arrangement for performing localized harvesting of the asparagus. All this can be integrated in a single tool.

In principle, proximity detection below the ground surface can be carried out using a number of known measurement principles for a proximity sensor. The proximity sensor may for example be arranged for underground proximity detection of asparagus and can be of various types, such as electrical, chemical, vibrational, acoustic, photonic (light), mechanical, electromagnetic, magnetic, piezoelectric, machine olfaction based, etc. Advantageously, properties such as the high water content of asparagus compared to its surrounding (soil) can be exploited for obtaining a sensor able to proximity detect a subsurface asparagus. For example, a time domain reflectometry can be carried out in a circuit, where part or the soil serves as a transmission line, and wherein the humidity and presence of the asparagus can be detected through change in reflectivity of a step signal. In a simple form, this can be carried out with a single electrode, but it may also be carried out with more than one electrodes and additional electrodes for shaping an electric field, for example by an electric field having a strong density of field strength in forward direction. Other properties can also be utilized for obtaining a subsurface proximity sensor, such as chemical properties. It may be desirable that the subsurface proximity sensor has a sufficiently small reaction time since it is moved below the ground surface with a certain velocity.

Optionally, the proximity sensor comprises at least one impedance sensor for proximity detection of asparagus below the ground surface.

In an embodiment, the proximity sensor comprises at least one of a capacitive and/or a resistive proximity impedance sensor for proximity detection of asparagus below the ground surface. The proximity sensors may be tuned for detection of asparagus by taking into account typical properties of asparagus, for example the fact that water may make up circa 93% of asparagus's composition.

In case of a capacitive proximity sensor, the sensor is based on a change in capacity. Such change in capacity may depend on the distance between the electrodes, electrode surface area, and permittivity of the medium in between. Since an asparagus typically contains more than 90% water, the factor between the dielectric properties of water and mineral soil may be sufficient for detecting a difference between soil (even wetted or moist soil) and an asparagus. Therefore, such a sensor may provide high robustness for variation in soil properties (e.g. water content), while being able to perform a contactless detection of an asparagus inside the soil. The sensor head of the proximity sensor induces field lines through a front portion of the sensor head. The field lines can be influenced by an asparagus in vicinity of the sensor head of the capacitive proximity sensor.

Alternatively or additionally, an electromagnetic signal can be transmitted in a direction of an asparagus with a frequency in a range of 1-10 GHz configured for increasing the temperature of the asparagus. The electromagnetic signal may for instance be transmitted by a microwave transmitter. A thermal proximity sensor can be obtained by employing a thermocouple arranged to measure temperature so as to detect asparagus as a result of a heat signature of the asparagus. Asparagus may include more than 90% water, while the soil may e.g. include 5-15% water. As a result of the microwaves, the temperature of the asparagus (and it's vicinity due to thermal transfer) can rise more strongly compared to the soil. This can enable underground proximity detection of the asparagus by using thermocouple or the like as the subsurface proximity sensor.

Optionally, a plurality of proximity sensors are arranged on a scanning assembly, each proximity sensor having a scanning area defined by a proximity detection range of the proximity sensor. In such an embodiment, one or more proximity sensors are arranged next to each other on a first row, and one or more proximity sensors are arranged next to each other at least on a second row displaced from the first row in a longitudinal scanning direction, such that the scanning areas of the proximity sensors cover an entire scanning width transverse to a longitudinal scanning direction.

In this way, the soil can be more efficiently scanned for subsurface asparagus. Each proximity sensor can have a proximity detection range, which defines a region surrounding the proximity sensor in which an asparagus can successfully be detected while being located below the ground surface. In an embodiment, a plurality of proximity sensors may be arranged in such a fashion that substantially an entire scanning width transverse to a longitudinal scanning direction can be covered so as to be able to scan a complete region (e.g. plane, volume, etc.) while the proximity sensors are moved only in a longitudinal direction. In an embodiment, during scanning, wherein the plurality of proximity sensors are being moved in the longitudinal direction, the relative distance between the plurality of proximity sensors may be maintained. However, once an asparagus is detected by a proximity sensor, the movement path of the relevant proximity sensor may be adjusted, wherein the relative distance with respect to the other proximity sensors in the scanning assembly can change. In an embodiment, the forward moving speed in the longitudinal direction of the scanning assembly can be changed for one or more proximity sensors being able to carry out the adjustment of the scanning path. Subsequently, the scanning assembly can be moved again at the previous forward moving speed when the necessary adjustments are performed. In this way, collision with asparagus can be prevented and/or localized harvesting of a detected asparagus may be performed.

In an embodiment, the proximity sensors can have different scanning depths with respect to each other. A first group can be arranged to scan at a first depth and a second group can be arranged to scan at a second depth, displaced from the first depth.

Optionally, the scanning areas of the proximity sensors at least partially overlap each other in a scanning width direction transverse to a longitudinal scanning direction.

In an embodiment, an overlap in the scanning width direction can result in redundancy when performing a scanning sweep wherein proximity sensors are moved in a longitudinal scanning direction.

Optionally, a central front portion of the scanning assembly is V-shaped.

In an embodiment, a plurality of proximity sensors can be arranged on a scanning assembly, wherein each proximity sensor held by a support arm can form a track when moved below the ground surface in a scanning movement direction. The scanning assembly may be arranged such that the different tracks of the proximity sensors are parallel to each other. As a result of a convex front portion or V-shape of the proximity sensors arranged on the scanning assembly, the proximity sensors at the front of the scanning assembly in the longitudinal scanning direction can interact with the soil and loosen the soil (comparable to a ground rake) such that the ground can be more evenly displaced. Advantageously, such embodiment is utilized during harvesting of asparagus from an elongated earth dam with a trapezoidal shape.

For elongated earth dams, it can be advantageous to have the tracks of the outer proximity sensors (and support arm) located close enough to the lateral edge of the earth dam, while preventing damage to the lateral sides of the elongated earth dam.

Optionally, at least during moving of a proximity sensor below the ground surface of an earth dam, at least one lateral surface of the earth dam is supported by a movable sidewall arranged to move alongside the lateral surfaces of the earth dam such as to prevent collapse as a result of a moving action of the at least one proximity sensor.

This may further prevent that loosened ground by the interaction of the proximity sensor being guided through the ground below the ground surface can significantly deform the earth dam shape. The movable sidewall can also be provided by a roller, slider or a crawler.

The invention further relates to a system for detecting asparagus in ground. The system comprises at least one proximity sensor, an actuator arranged for moving the at least one proximity sensor along a scanning movement path of the sensor below a ground surface, and a controller arranged for controlling the movement of the at least one proximity sensor. At least one proximity sensor is arranged for local proximity detection of an asparagus while being located below the ground surface. The actuator is arranged for adjusting said movement path of the proximity sensor upon local proximity detection of an asparagus by the at least one proximity sensor.

The proximity sensing system can provide a solution for accurately localizing asparagus below a ground surface. The system can be less complex, less expensive and more accurate compared to long range detection systems, such as microwave, X-ray or radar detection systems. In an example, a subsurface rake-shaped scanning assembly comprising proximity sensors arranged for passing through the ground for proximity detection of asparagus can be provided. Upon detection of an asparagus, the proximity sensor must change its scanning movement path so as to evade collision with the asparagus, perform a more accurate localization of the asparagus (e.g. moving from scanning depth to a cutting depth), and/or perform a localized harvesting action. Data representative for the location of the asparagus, such as a triggered detection location of the proximity sensor, can be used by a harvesting system to isolate and cut out the asparagus. An integrated harvesting system performing both detection, localization and harvesting is also be envisaged.

Optionally, the proximity sensor is arranged for performing contactless local proximity detection with respect to the detected asparagus.

Optionally, the controller is arranged to adjust the movement path of the proximity sensor so as to evade collision with the asparagus detected by the proximity sensor, while registering a location of the proximity sensor where the asparagus is detected.

Optionally, the controller is arranged to adjust the movement path of at least one proximity sensor to follow a detected outer surface of the detected asparagus from a scanning depth to a cutting depth.

Optionally, the at least one proximity sensor is arranged on a cutting tool, wherein the controller is arranged to move the cutting tool relative to the asparagus for performing localized harvesting of the asparagus detected by the at least one proximity sensor, wherein during localized harvesting, based on the location of the asparagus detected by the proximity sensor, the cutting tool is moved to a cutting depth for cutting the asparagus.

According to an embodiment, asparagus is localized below a ground surface with proximity sensors (for instance arranged similar as a rake). However, in an alternative embodiment, an integrated sensor and cutting mechanism is employed. Such integrated system may avoid a proximity sensor to be pulled out of the soil followed by moving a cutter to that location for performing the cutting action and grabbing the asparagus out of the ground. An integrated proximity sensor and cutting mechanism can reduce the amount of actions needed and simplify the system and also reduce the chance that immature asparagus, i.e. not yet of sufficient length are damaged. It is noted that this is very important, because a damaged asparagus is typically unable to grow any further. If an asparagus is detected, the proximity sensing cutting mechanism can move downward in a straight line, or alternatively and more accurately, follow a detected outer surface of the asparagus to a cutting depth at which the cutting action can be initiated optionally followed by a pinching/grabbing action to pull the asparagus out of the ground. Advantageously, in this manner the number of robotic actions by the system can be reduced. Also the risk of errors can be reduced.

Optionally, the proximity sensor comprises at least one impedance sensor for proximity detection of asparagus below the ground surface.

Optionally, a plurality of proximity sensors are arranged on a scanning assembly, each proximity sensor having a scanning area defined by a proximity detection range of the proximity sensor, wherein one or more proximity sensors are arranged next to each other on a first row, and one or more proximity sensors are arranged next to each other at least on a second row displaced from the first row in a longitudinal scanning direction, such that the scanning areas of the proximity sensors cover an entire scanning with transverse to a longitudinal scanning direction.

Optionally, the scanning areas of the proximity sensors at least partially overlap each other in a scanning width direction transverse to a longitudinal scanning direction.

Optionally, a central front portion is V shaped.

Optionally, the system further comprises a movable sidewall arranged to move alongside the lateral surfaces of an earth dam such as to prevent collapse as a result of a moving action of the at least one proximity sensor below the ground surface of the earth dam. Optionally, a retractable top push plate or roller is provided to compactify the bed as a final action after yielding. This is preferable to prevent drying out of the sand bed, i.e. to control the moisture content of the sand bed by suitable retraction.

The invention further relates to a computer program product comprising instructions for causing a controller of the described devices to carry out the steps of the method according to any one of the described methods according to the invention.

It will be appreciated that any of the aspects, features and options described in view of the harvesting system apply equally to the the described methods. It will also be clear that any one or more of the above aspects, features and options can be combined.

### BRIEF DESCRIPTION OF THE DRAWING

The inventon will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a perspective view of an embodiment of a system;
Fig. 2a shows a top view of an embodiment of a system;
Fig. 2b shows a top view of an embodiment of a system;
Fig. 3 shows a side view of an embodiment of a system;
Fig. 4 shows a proximity sensor and a schematic electrical diagram of a proximity sensor of an embodiment;
Fig. 5 shows a graph of sensed data of an embodiment;
Fig. 6 shows a perspective view of an embodiment of a system;
Fig. 7 shows a top view of an embodiment of a system; and
Fig. 8 shows a perspective view of an embodiment.

### DETAILED DESCRIPTION

Unless otherwise defined, all terms used herein have the same meaning as commonly understood by one of ordinary skill in the art to which this invention belongs as read in the context of the description and drawings.

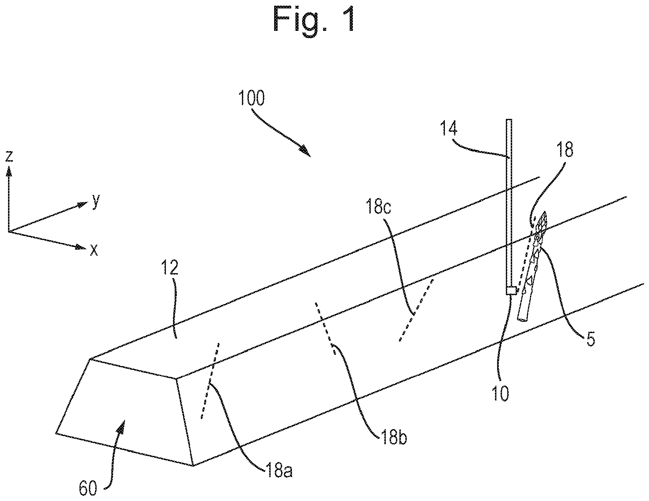

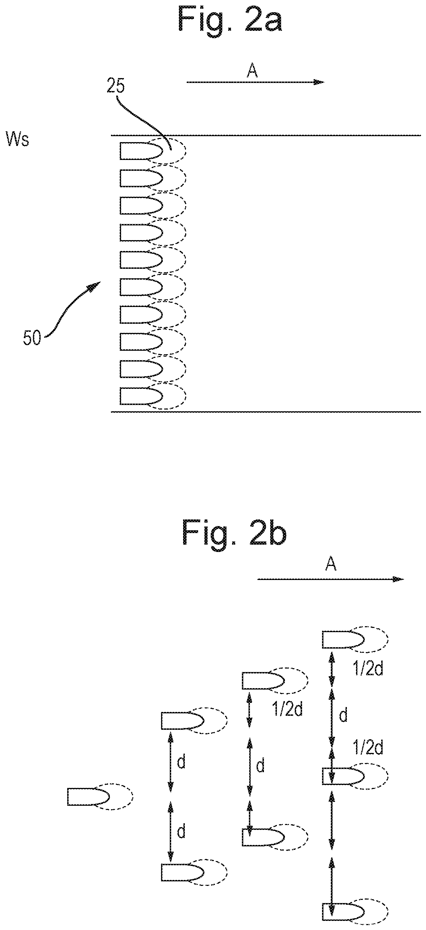

Fig. 1 shows a perspective view of an embodiment of the system (100) for detecting asparagus (5) from elongated earth dams (60). The asparagus (5) can be detected individually. The sensed information can then be used for individual harvesting of the asparagus (5). The proximity sensor (10) is inserted below the ground surface (12) of the elongated earth dam (60) and moved in a longitudinal scanning direction (A), which corresponds to the y-axis in the figure. Upon detection of an asparagus (5), the movement scanning path (15) of the proximity sensor (10) is adjusted, in this example the proximity sensor is arranged to follow a detected outer surface of the detected asparagus (5) from a scanning depth (Hs) to a cutting depth (H_{C}). In the figure, the proximity sensor has encountered four asparagus, wherein for the first three asparagus lines (18, 18b, 18c) have been determined following the asparagus to the cutting depth (H_{C}). The proximity sensor (10) is scanning the fourth asparagus and moving to the cutting depth (H_{C}), while registering the movement of the proximity sensor (10) so as to be able to localize the asparagus (5). The lines can provide a three-dimensional location and orientation (x, y, z) of the detected asparagus inside the elongated earth dam (60). This information can be utilized for efficient harvesting of the asparagus. In an embodiment, the proximity sensor (10) of system (100) can derive whether the detected asparagus is mature, based on sensed information. For immature asparagus, which may have a shorter length measured from the root to the crown of the asparagus,, the system (100) can be arranged to not perform adjustment of the scanning movement path from a scanning depth (H_{S}) to a cutting depth (H_{C}) for accurate localization of the immature asparagus. In an exemplary embodiment, in case an immature asparagus is detected, the system (100) can be arranged to adjust the movement scanning path (15) so as to evade collision with the immature asparagus, e.g. by a biased retraction force extracting the sensor 10 from the soil. Fig. 2a and Fig. 2b show a top view of embodiments of the system (100). A plurality of proximity sensors are arranged on a scanning assembly (50). The embodiment of Fig. 2a comprises a row of proximity sensors (10) arranged next to each other. Each proximity sensor has a proximity detection range (25) which can define a scanning area, in which the proximity sensor (10) is able to detect an underground asparagus. In this embodiment, a local proximity detection of asparagus (5) can be performed contactless with respect to the detected asparagus (5). The row of proximity sensors (10) can be moved in a longitudinal scanning direction while being positioned below the ground surface (12) at a scanning depth (Hs). The shape of the proximity sensors can be arranged to reduce resistance while being moved in ground. However, the shape can also be arranged to shape the proximity detection range (25). In Fig. 2b, two rows of proximity sensors arranged next to each other are illustrated. In this example, the scanning assembly is provided by a plurality of sensor rows, wherein a front sensor row has a limited lateral extent compared to subsequent backward sensor row.
The first row is displaced from the second row in a longitudinal scanning direction (A). For both embodiments shown in figs. 2a and 2b, the proximity sensors (10) of the scanning assembly (50) are arranged such that the scanning areas of the proximity sensors cover an entire scanning width (Ws) transverse to a longitudinal scanning direction (A). The embodiment of Fig. 2b may have the advantage that the individual proximity sensors (10) have more freedom of movement with respect to other proximity sensors (10), for example when evading a collision with an asparagus. The Fig. 2 example shows sensors that are provided at fixed interdistances (2d) on a sensor row, and wherein a subsequent sensor row is provided with sensors at halfway (d, 1/2d) the interdistance of a previous row, to provide a shifted sensor position for a subsequent sensor row.

Other types of configurations with for example more rows are possible.

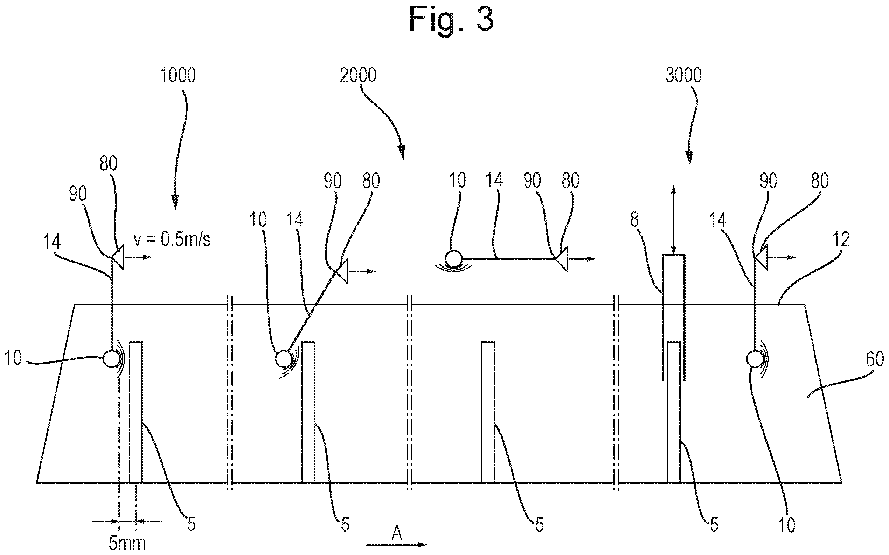

Fig. 3 shows a side view of an embodiment of the system (100). The sequence of detecting and harvesting an asparagus (5) below a ground surface (12) is shown in different steps, namely a detection step (1000), a retraction step (2000), and a cut and remove step (3000). During the detection step (1000), the proximity sensor (10), which is coupled by arm support (14) with an actuator (80), is moved through the elongated earth dam (60) by said actuator (80) at a certain scanning depth (Hs). In an embodiment the velocity of the movement with respect to the ground surface (12) in the scanning direction (A) is kept substantially constant during scanning for asparagus (5). When the proximity sensor (10) detects an asparagus entering its proximity detection region (25), the system will initiate an adjustment of the movement of the proximity sensor (10). The detection of the asparagus (5) can be performed contactless (for example maintaining a distance of at least 5 mm). After the detection step (1000), a retraction step (2000) can be carried out wherein the scanning movement path is adjusted. The proximity sensor (10) is arranged to send a signal to a pivot arrangement (90) for pivoting the proximity sensor (10) against the forward movement so as to lift the proximity sensor (10) out of the ground, above the ground surface (12), while the proximity sensor (10) is being moved in the longitudinal direction (A). In this way, a collision of the scanning arrangement with the asparagus (5) can be prevented. During the cut and remove step (3000), a detection location (6) of the asparagus, which is determined by the proximity sensor (10), is used for activation of an asparagus cutting device (8). The shown cutting device (8) comprises a grabber for extracting the cut asparagus out of the soil. Other types of cutting devices can be employed. Once the proximity sensor has passed the detected asparagus, the proximity sensor can be reentered into the ground by pivoting the support arm (14) back into the soil so as to continue the scanning process with the proximity sensor (10) moving along a scanning movement path at the scanning depth (Hs).

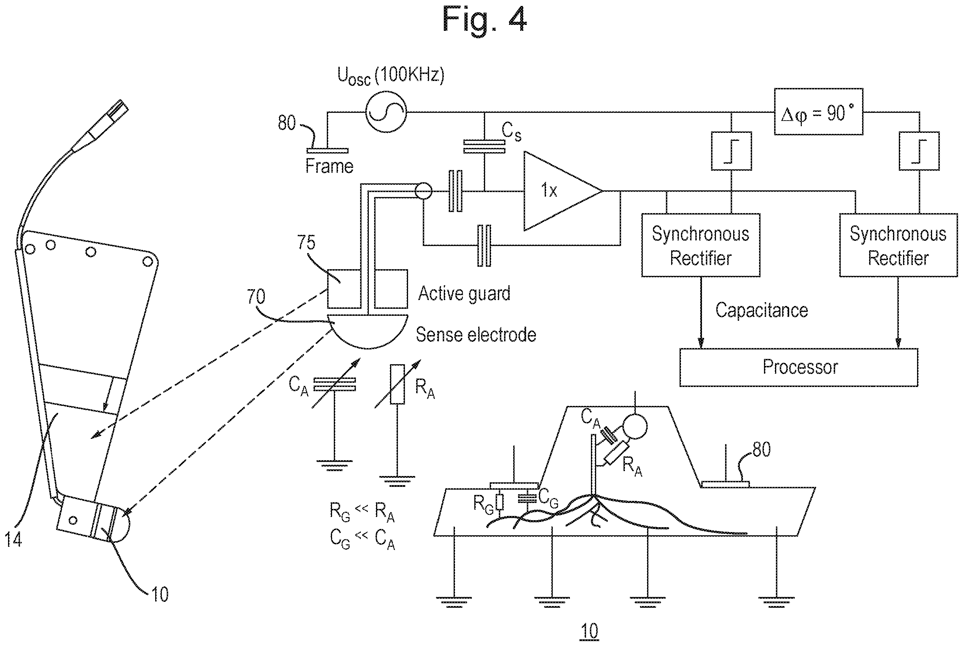

Fig. 4 shows a proximity sensor (10) and a schematic electrical diagram of a proximity sensor (10) of an embodiment. The proximity sensor (10) comprise a sense electrode 70 and detection circuitry to detect a capacitive and a resistive impedance value. The sense electrode 70 is in close proximity of a guard electrode 75 that is actively held at a stabilizing voltage relative to the sense electrode. By having the guard electrode at a stabilizing voltage a higher forward sensitivity of the electrode 70 is achieved.

The proximity sensor (10) is arranged for detection of asparagus (5) by taking into account typical properties for asparagus, such as the water content of typical asparagus. Other properties can also be used for tuning the proximity sensor (10). The capacitive impedance value (10) can be used to measure a level indicative of moisture. Typically sensed soil moisture levels (e.g. 5-15%) are substantially lower than the sensed asparagus (5) moisture levels (>90%) by the proximity sensor (10), which enables accurate subsurface asparagus (5) proximity detection. A voltage is supplied at a pilot frequency (e.g. 100kHz) to the proximity sensor (10). A capacitive a resistive value can be measured from the sensed signal of the impedance proximity sensor (10). Current leakage to the soil is observed with the proximity sensor (10) in the ground. A closed circuit can be obtained by means of a grounding frame 80, e.g. a metal wheel inserted into the ground. The current which is in phase (resistive term) with the voltage and the current with a 90 degrees phase change (capacitive term) are measured. The obtained capacitive term and resistive term can be used for measuring an indication of moisture. Typically, in case of very moist soil better results are obtained by using the capacitive term, because moist soil has a higher dielectric constant, thus resulting a higher C value, while the resistive becomes worse (due to more short circuit, from leaking directly to ground). In dry soil, the resistive term may provide better results than the capacitive term for detection of asparagus. Therefore, depending on the humidity of the soil, more accurate information can be extracted from the capacitive or the resistive signal measured by the proximity sensor (10). Therefore, a capacitive proximity sensor or resistive proximity sensor can be used stand-alone as a proximity sensor (10). Advantageously, both can be used to obtain more accurate results. For example, if an air filled cavity in the soil is encountered by the proximity sensor (10), this may be well detected in the resistive term (much higher signal), while the capacitive term will decrease, reacting in an opposite manner. When an asparagus is encountered below the ground surface (12), both the capacitive term and the resistive term will typically increase. Thus, by taking into account different trends of the capacitive and resistive signals, ground cavities can be distinguished. This may reduce the risk of false positives for the subsurface detection of asparagus. A time averaged - i.e. low pass filtered change in both capacitive and resistive measurement values above a practical threshold is found to be a reliable detection indicator for proximity presence of the asparagus.

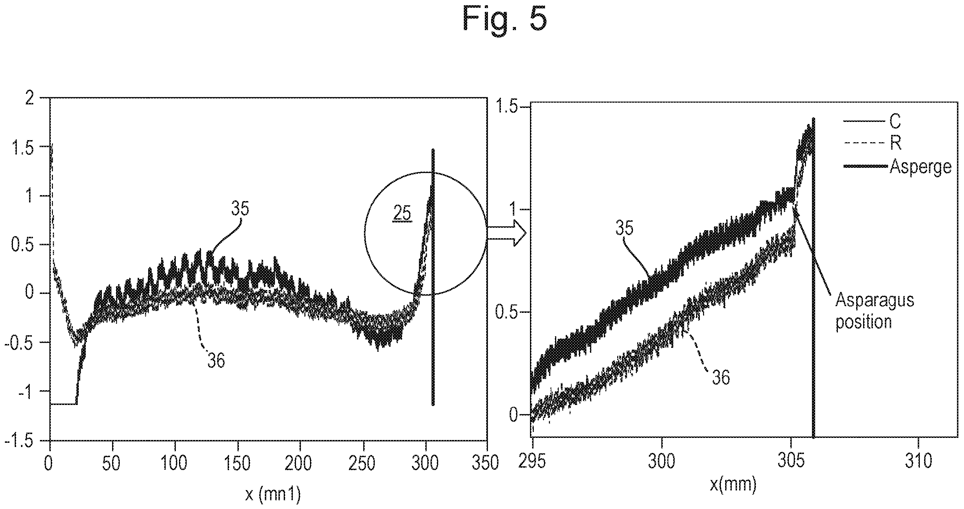

Fig. 5 shows a graph of sensed data of an embodiment. The capacitive signal (35) and the resistive signal (36) of a proximity sensor (10) is plotted while the proximity sensor (10) is moved towards an asparagus (5). While the distance of the proximity sensor (10) to the asparagus (5) is decreased, at a certain point when the asparagus (5) enters the proximity detection range (25) of the proximity sensor (10), the value of both the capacitive signal (35) and the resistive signal (36) is increased in the vicinity of the asparagus (5). As can be seen from the plots, it is possible to perform a contactless detection of the asparagus (5), since the values in this example start to increase substantially starting from a distance of approximately 10 mm from the asparagus (5).

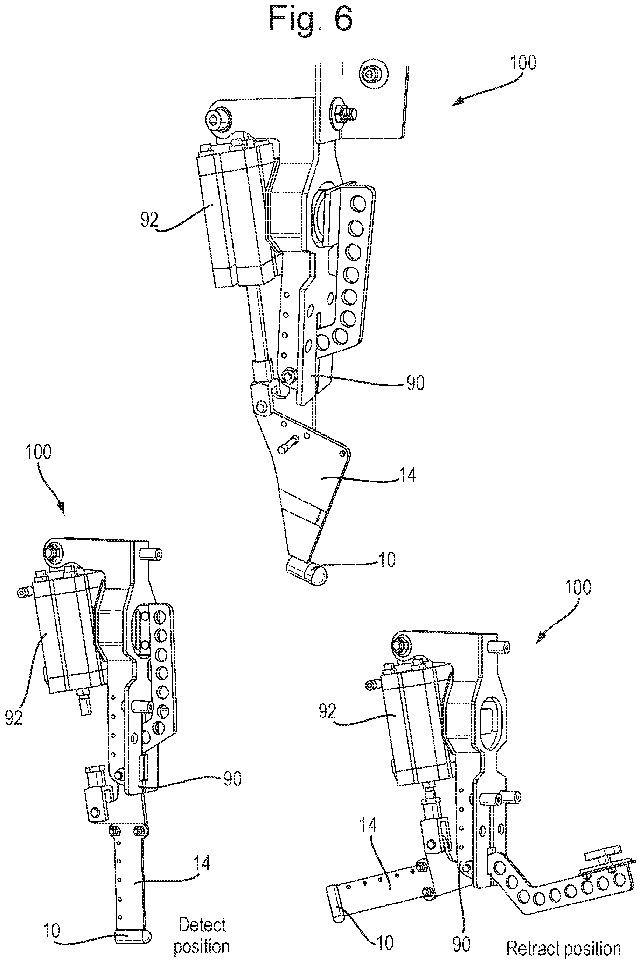

Fig. 6 shows a perspective view of an embodiment of the system (100). This embodiment comprises a release mechanism with a robotic swing arm which can pivot so as to raise the proximity sensor (10) out of the soil. The proximity sensor (10) can be held in a vertical position (for detection) by an electromagnet while moving the proximity sensor (10) under the ground surface (12) in a longitudinal scanning direction through an elongated earth dam (60). The robotic swing arm holding the proximity sensor (10) inside the soil can be released magnetically (electromagnet) so as to be pulled back by a biasing means, such as a spring or pneumatic cylinder (92). The pneumatic cylinder (92) is arranged to pivot the support arm (14) upwards and downwards. A shunt resistance may be employed for faster release responses. Once the electromagnet is released, the pneumatic cylinder (92) can pivot the support arm (14) so that the proximity sensor (10) is moved upward. By employing a pneumatic cylinder (92), the need for a separate clamping mechanism can be avoided.

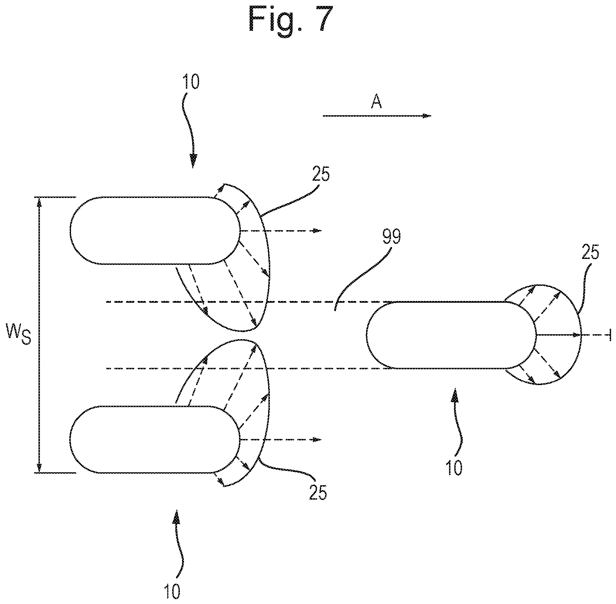

Fig. 7 shows a top view of an embodiment of the system (100). A scanning assembly comprising three proximity sensors (10) is shown, wherein the sensors (10) are arranged to form a V-shaped front portion. The scanning detection range (25) of the two rear proximity sensors (10) can be influenced by the displaced ground track (99) resulting from the movement of the front proximity sensor (10) through the ground (ground-structure interaction). A scanning assembly comprising a plurality of proximity sensors (10) can be arranged to take into account this effect so as to efficiently cover an entire scanning width transverse to a longitudinal scanning direction (A).

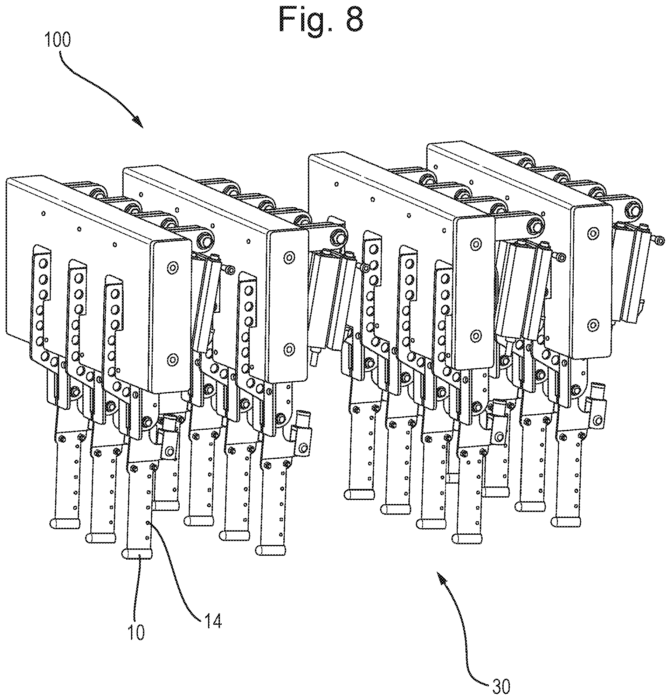

Fig. 8 shows a perspective view of an embodiment of the system (100) comprising a scanning assembly (50) with a plurality of proximity sensors (10) arranged in different rows (3x4x4x4) displaced with respect to each other. Scanning assemblies (50) with other configurations are also envisaged, for example with proximity sensors also having different height/depth with respect to each other.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a hard disk, solid state disk, a CD ROM or a semiconductor ROM, or another magnetic recording medium, for example a floppy disc. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

In various embodiments, the controller can communicate using wireless systems, wired systems, or a combination of both. When implemented as a wired system, the system may include components and interfaces suitable for communicating or wired communications media, such as input/output (I/O) adapters, physical connectors to connect the I/O adapter with a corresponding wired communications medium. When implemented as a wireless system, the system may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. A wireless communication device may be included in order to transmit and receive signals using various suitable wireless communications techniques. Such techniques may involve communications across one or more wireless networks. Exemplary wireless networks include, but are not limited to, cellular networks, wireless local area networks (WLANs, cfr. WiFi), wireless personal area networks (WPANs), wireless metropolitan area network (WMANs), satellite networks, et cetera. In communicating across such networks, the transmitter may operate in accordance with one or more applicable standards in any version.

Herein, the invention is described with reference to specific examples of embodiments of the invention as defined by the claim.

## Claims

1. Method for detecting asparagus (5) in ground for asparagus harvest, the method comprising the steps of : inserting at least one proximity sensor (10) below a ground surface at a scanning depth, wherein the at least one proximity sensor (10) is arranged for detecting asparagus (5) in proximity of the proximity sensor (10), **characterised by**:
moving, at the scanning depth below the ground surface, the at least one proximity sensor (10) through the ground for defining a scanning movement path (15) of the sensor below the ground surface; and
adjusting said movement path of the proximity sensor (10) upon local proximity detection of an asparagus (5) by the at least one proximity sensor (10).

2. Method according to claim 1, wherein the local proximity detection is performed contactless with respect to the detected asparagus (5).

3. Method according to claims 1 or 2, wherein the movement path of the proximity sensor (10) is adjusted so as to evade collision with the asparagus (5) detected by the proximity sensor (10), while registering a location of the proximity sensor (10) where the asparagus (5) is detected.

4. Method according to any one of the preceding claims, wherein the proximity sensor (10) comprises at least one electrical impedance sensor for proximity detection of asparagus (5) below the ground surface.

5. System (100) for detecting asparagus (5) in ground, the system (100) comprising:
at least one proximity sensor; wherein the at least one proximity sensor is arranged for local proximity detection of an asparagus (5) while being located below the ground surface, **characterised by** an actuator arranged for moving the at least one proximity sensor through the ground along a scanning movement path (15) of the sensor below the ground surface;
a controller arranged for controlling the movement of the at least one proximity sensor;
wherein the actuator is arranged for adjusting said movement path of the proximity sensor upon local proximity detection of an asparagus (5) by the at least one proximity sensor.

6. System (100) according to claim 5, wherein the proximity sensor is arranged for performing contactless local proximity detection with respect to the detected asparagus (5).

7. System (100) according to any one of the claims 5-6, wherein the controller is arranged to adjust the movement path of the proximity sensor so as to evade collision with the asparagus (5) detected by the proximity sensor, while registering a location of the proximity sensor where the asparagus (5) is detected.

8. System (100) according to any one of the claims 5-7, wherein the controller is arranged to adjust the movement path of at least one proximity sensor to follow a detected outer surface of the detected asparagus (5) from a scanning depth to a cutting depth.

9. System (100) according to any one of the claims 5-8, wherein the at least one proximity sensor is arranged on a cutting tool, wherein the controller is arranged to move the cutting tool relative to the asparagus (5) for performing localized harvesting of the asparagus detected by the at least one proximity sensor, wherein during localized harvesting, based on the location of the asparagus (5) detected by the proximity sensor, the cutting tool is moved to a cutting depth for cutting the asparagus (5).

10. System (100) according to any one of the claims 5-9, wherein the proximity sensor comprises at least one electrical impedance sensor for proximity detection of asparagus (5) below the ground surface.

11. System (100) according to any one of the claims 5-10, wherein a plurality of proximity sensors are arranged on a scanning assembly (50), each proximity sensor having a scanning area defined by a proximity detection range of the proximity sensor, wherein one or more proximity sensors are arranged next to each other on a first row, and one or more proximity sensors are arranged next to each other at least on a second row displaced from the first row in a longitudinal scanning direction, such that the scanning areas of the proximity sensors cover an entire scanning with transverse to a longitudinal scanning direction.

12. System (100) according to claim 11, wherein the scanning areas of the proximity sensors at least partially overlap each other in a scanning width direction transverse to a longitudinal scanning direction.

13. System (100) according to any one of claims 11-12, wherein a central front portion of the scanning assembly (50) is V shaped.

14. System (100) according to any one of claims 5-13, comprising a movable sidewall arranged to move alongside the lateral surfaces of an earth dam such as to prevent collapse as a result of a moving action of the at least one proximity sensor below the ground surface of the earth dam.

15. A computer program product comprising instructions for causing the controller of any one of the preceding device claims to carry out the steps of the method according to any one of the preceding method claims.

## Patentansprüche

1. Verfahren zum Erfassen von Spargel (5) im Boden für die Spargelernte, wobei das Verfahren die folgenden Schritte umfasst:
Einsetzen wenigstens eines Näherungssensors (10) unterhalb einer Bodenoberfläche in einer Abtasttiefe, wobei der wenigstens eine Näherungssensor (10) zum Erfassen von Spargel (5) in der Nähe des Näherungssensors (10) angeordnet ist, **gekennzeichnet durch**:
Bewegen des wenigstens einen Näherungssensors (10) in der Abtasttiefe unterhalb der Bodenoberfläche durch den Boden, um eine Abtastbewegungsbahn (15) des Sensors unterhalb der Bodenoberfläche zu definieren; und
Anpassen der Bewegungsbahn des Näherungssensors (10) bei örtlicher Näherungserfassung eines Spargels (5) durch den wenigstens einen Näherungssensor (10).

2. Verfahren nach Anspruch 1, wobei die örtliche Näherungserfassung berührungslos in Bezug auf den erfassten Spargel (5) durchgeführt wird.

3. Verfahren nach Anspruch 1 oder 2, wobei die Bewegungsbahn des Näherungssensors (10) so eingestellt wird, dass eine Kollision mit dem vom Näherungssensor (10) erfassten Spargel (5) vermieden wird, wobei ein Ort des Näherungssensors (10) registriert wird, an dem der Spargel (5) erfasst wird.

4. Verfahren nach einem der vorhergehenden Ansprüche, wobei der Näherungssensor (10) wenigstens einen elektrischen Impedanzsensor zur Näherungserfassung von Spargel (5) unterhalb der Bodenoberfläche umfasst.

5. System (100) zum Erfassen von Spargel (5) im Boden, wobei das System (100) umfasst:
wenigstens einen Näherungssensor; wobei der wenigstens eine Näherungssensor zur örtlichen Näherungserfassung eines Spargels (5) angeordnet ist, während er sich unterhalb der Bodenoberfläche befindet, **gekennzeichnet durch**
einen Aktuator, der so angeordnet ist, dass er den wenigstens einen Näherungssensor entlang einer Abtastbewegungsbahn (15) des Sensors unter der Bodenoberfläche durch den Boden bewegt;
eine Steuerung, die zum Steuern der Bewegung des wenigstens einen Näherungssensors angeordnet ist;
wobei der Aktuator zum Anpassung der Bewegungsbahn des Näherungssensors bei örtlicher Näherungserfassung eines Spargels (5) durch den wenigstens einen Näherungssensor angeordnet ist.

6. System (100) nach Anspruch 5, wobei der Näherungssensor zur Durchführung einer berührungslosen örtlichen Näherungserfassung in Bezug auf den erfassten Spargel (5) angeordnet ist.

7. System (100) nach einem der Ansprüche 5 bis 6, wobei die Steuerung so angeordnet ist, dass sie die Bewegungsbahn des Näherungssensors so anpasst, dass eine Kollision mit dem vom Näherungssensor erfassten Spargel (5) vermieden wird, während sie einen Ort des Näherungssensors registriert, an dem der Spargel (5) erfasst wird.

8. System (100) nach einem der Ansprüche 5 bis 7, wobei die Steuerung so angeordnet ist, dass sie die Bewegungsbahn des wenigstens einen Näherungssensors so anpasst, dass er einer erfassten Außenfläche des erfassten Spargels (5) von einer Abtasttiefe bis zu einer Schnitttiefe folgt.

9. System (100) nach einem der Ansprüche 5 bis 8, wobei der wenigstens eine Näherungssensor an einem Schneidwerkzeug angeordnet ist, wobei die Steuerung so angeordnet ist, dass sie das Schneidwerkzeug relativ zu dem Spargel (5) bewegt, um ein lokalisiertes Ernten des von dem wenigstens einen Näherungssensor erfassten Spargels durchzuführen, wobei das Schneidwerkzeug während des lokalisierten Erntens auf der Grundlage des von dem Näherungssensor erfassten Orts des Spargels (5) auf eine Schnitttiefe zum Schneiden des Spargels (5) bewegt wird.

10. System (100) nach einem der Ansprüche 5 bis 9, wobei der Näherungssensor wenigstens einen elektrischen Impedanzsensor zur Näherungserfassung von Spargel (5) unterhalb der Bodenoberfläche umfasst.

11. System (100) nach einem der Ansprüche 5 bis 10, wobei mehrere Näherungssensoren an einer Abtastbaugruppe (50) angeordnet sind, wobei jeder Näherungssensor einen Abtastbereich aufweist, der durch einen Näherungserfassungsbereich des Näherungssensors definiert ist, wobei ein oder mehrere Näherungssensoren auf einer ersten Reihe nebeneinander angeordnet sind und ein oder mehrere Näherungssensoren wenigstens auf einer zweiten Reihe in einer Längsabtastrichtung versetzt zur ersten Reihe nebeneinander angeordnet sind, so dass die Abtastbereiche der Näherungssensoren eine gesamte Abtastung quer zu einer Längsabtastrichtung abdecken.

12. System (100) nach Anspruch 11, wobei sich die Abtastbereiche der Näherungssensoren in einer Abtastbreitenrichtung quer zu einer Längsabtastrichtung wenigstens teilweise überlappen.

13. System (100) nach einem der Ansprüche 11 bis 12, wobei ein zentraler vorderer Abschnitt der Abtastbaugruppe (50) V-förmig ist.

14. System (100) nach einem der Ansprüche 5 bis 13, umfassend eine bewegliche Seitenwand, die so angeordnet ist, dass sie sich entlang der Seitenflächen eines Erddamms bewegt, um einen Einsturz infolge einer Bewegungsaktion des wenigstens einen Näherungssensors unterhalb der Bodenoberfläche des Erddamms zu verhindern.

15. Computerprogrammprodukt, das Anweisungen umfasst, um zu bewirken, dass die Steuerung eines der vorangehenden Vorrichtungsansprüche die Schritte des Verfahrens nach einem der vorangehenden Verfahrensansprüche ausführt.

## Revendications

1. Méthode de détection d'asperges (5) dans le sol pour la récolte d'asperges, la méthode comprenant les étapes de :
l'insertion au moins d'un capteur de proximité (10) sous une surface du sol à une profondeur de balayage, dans laquelle l'au moins un capteur de proximité (10) est agencé pour la détection d'asperges (5) à proximité du capteur de proximité (10), **caractérisée par** :
le déplacement, à la profondeur de balayage sous la surface du sol, de l'au moins un capteur de proximité (10) à travers le sol pour la définition d'un trajet de mouvement de balayage (15) du capteur sous la surface du sol ; et
l'ajustement dudit trajet de mouvement du capteur de proximité (10) suite à la détection de proximité locale d'une asperge (5) par l'au moins un capteur de proximité (10).

2. Méthode selon la revendication 1, dans laquelle la détection de proximité locale est réalisée sans contact par rapport à l'asperge (5) détectée.

3. Méthode selon la revendication 1 ou 2, dans laquelle le trajet de mouvement du capteur de proximité (10) est ajusté de sorte à éviter la collision avec l'asperge (5) détectée par le capteur de proximité (10) tout en enregistrant un emplacement du capteur de proximité (10) où l'asperge (5) est détectée.

4. Méthode selon l'une quelconque des revendications précédentes, dans laquelle le capteur de proximité (10) comprend au moins un capteur d'impédance électrique pour la détection de proximité d'asperges (5) sous la surface du sol.

5. Système (100) pour la détection d'asperges (5) dans le sol, le système (100) comprenant :
au moins un capteur de proximité ; dans lequel l'au moins un capteur de proximité est agencé pour la détection de proximité locale d'une asperge (5) tout en étant situé sous la surface du sol, **caractérisé par** un actionneur agencé pour le déplacement de l'au moins un capteur de proximité à travers le sol le long d'un trajet de mouvement de balayage (15) du capteur sous la surface du sol ;
un dispositif de commande pour la commande du mouvement de l'au moins un capteur de proximité ;
dans lequel l'actionneur est agencé pour l'ajustement dudit trajet de mouvement du capteur de proximité suite à la détection de proximité locale d'une asperge (5) par l'au moins un capteur de proximité.

6. Système (100) selon la revendication 5, dans lequel le capteur de proximité est agencé pour la réalisation de la détection de proximité locale sans contact par rapport à l'asperge (5) détectée.

7. Système (100) selon l'une quelconque des revendications 5 à 6, dans lequel le dispositif de commande est agencé pour ajuster le trajet de mouvement du capteur de proximité de sorte à éviter la collision avec l'asperge (5) détectée par le capteur de proximité, tout en enregistrant un emplacement du capteur de proximité où l'asperge (5) est détectée.

8. Système (100) selon l'une quelconque des revendications 5 à 7, dans lequel le dispositif de commande est agencé pour ajuster le trajet de mouvement d'au moins un capteur de proximité afin de suivre une surface extérieure détectée de l'asperge (5) détectée à partir d'une profondeur de balayage à une profondeur de coupe.

9. Système (100) selon l'une quelconque des revendications 5 à 8, dans lequel l'au moins un capteur de proximité est agencé sur un outil de coupe, dans lequel le dispositif de commande est agencé pour déplacer l'outil de coupe par rapport à l'asperge (5) pour la réalisation de la récolte localisée de l'asperge détectée par l'au moins un capteur de proximité, dans lequel pendant la récolte localisée, sur la base de l'emplacement de l'asperge (5) détectée par le capteur de proximité, l'outil de coupe est déplacé à une profondeur de coupe pour la coupe de l'asperge (5).

10. Système (100) selon l'une quelconque des revendications 5 à 9, dans lequel le capteur de proximité comprend au moins un capteur d'impédance électrique pour la détection de proximité d'asperges (5) sous la surface du sol.

11. Système (100) selon l'une quelconque des revendications 5 à 10, dans lequel une pluralité de capteurs de proximité est agencée sur un ensemble de balayage (50), chaque capteur de proximité présentant une zone de balayage définie par une plage de détection de proximité du capteur de proximité, dans lequel un ou plusieurs capteurs de proximité sont agencés les uns près des autres sur une première rangée, et un ou plusieurs capteurs de proximité sont agencés les uns près des autres au moins sur une seconde rangée déplacée de la première rangée dans une direction de balayage longitudinale de sorte que les zones de balayage des capteurs de proximité couvrent un balayage entier transversalement à une direction de balayage longitudinale.

12. Système (100) selon la revendication 11, dans lequel les zones de balayage des capteurs de proximité se recouvrent les unes les autres au moins partiellement dans une direction de largeur de balayage transversale à une direction de balayage longitudinale.

13. Système (100) selon l'une quelconque des revendications 11 à 12, dans lequel une portion avant centrale de l'ensemble de balayage (50) est en forme de V.

14. Système (100) selon l'une quelconque des revendications 5 à 13, comprenant une paroi latérale mobile agencée pour se déplacer le long des surfaces latérales d'un remblai de terre de sorte à empêcher l'effondrement suite à une action mobile de l'au moins un capteur de proximité sous la surface du sol du remblai de terre.

15. Produit de programme informatique comprenant des instructions pour amener le dispositif de commande selon l'une quelconque des revendications précédentes de dispositif à réaliser les étapes de la méthode selon l'une quelconque des revendications précédentes de méthode.
